# EUROPEAN PATENT SPECIFICATION

(11) **EP 4 529 770 B1**
(45) Date of publication and mention of the grant of the patent: **01.04.2026**
(21) Application number: 23200976.1
(22) Date of filing: 29.09.2023
(51) Int. Cl.: A21D 13/00, A23L 5/20, A23L 7/104, A23L 7/109, A23L 7/126, A23L 7/143, A21D 2/00, A21D 2/26, A21D 8/04, A21D 13/066

(54) **PROCESS FOR PREPARING A MODIFIED CEREAL FLOUR, A MODIFIED CEREAL FLOUR, AND A CEREAL FLOUR BASED PROCESSED FOOD**
VERFAHREN ZUR HERSTELLUNG EINES MODIFIZIERTEN GETREIDEMEHLS, MODIFIZIERTES GETREIDEMEHL UND VERARBEITETES NAHRUNGSMITTEL AUF BASIS VON GETREIDEMEHL
PROCÉDÉ DE PRÉPARATION D'UNE FARINE DE CÉRÉALES MODIFIÉE, FARINE DE CÉRÉALES MODIFIÉE ET ALIMENT TRANSFORMÉ À BASE DE FARINE DE CÉRÉALES

(30) Priority: 28.09.2023 PT 2023118944
(43) Date of publication of application: 02.04.2025
(73) Proprietor: Universidade de Trás-os-Montes e Alto Douro, 5001-801 Vila Real (PT)
(72) Inventor: RIBEIRO, JOSÉ MIGUEL SILVA FERREIRA, 5000-801 Vila Real (PT); NUNES, FERNANDO HERMÍNIO MILHEIRO, 5000-801 Vila Real (PT)
(74) Representative: Monteiro Alves, Inês

(56) References cited:
- WO-A1-2021/250712
- US-A- 6 106 887
- US-A1- 2023 232 874
- GIANFRANI ET AL: "Transamidation of Wheat Flour Inhibits the Response to Gliadin of Intestinal T Cells in Celiac Disease", GASTROENTEROLOGY, ELSEVIER INC, US, vol. 133, no. 3, 1 September 2007 (2007-09-01), pages 780 - 789, XP022246624, ISSN: 0016-5085, DOI: 10.1053/J.GASTRO.2007.06.023

## Description

### Technical Field

The present invention relates to a process for preparing a modified cereal flour, and a modified cereal flour, besides a cereal flour based processed food produced by using the same modified cereal flour. The present invention is in the technical field of the treatment of flour by adding materials thereto before baking.

### Background Art

Cereals, including wheat, hold immense worldwide importance, providing staple foods, supporting economies, and ensuring food security. They are vital for human nutrition, cultural traditions, and employment opportunities, serving as a significant source of income for farmers and associated industries. Additionally, cereals contribute to livestock feed, industrial applications, and climate resilience, making them essential for sustainable development.

Gluten, the protein component found in wheat, imparts unique viscoelastic properties that enable the production of various food products from wheat dough (Wieser et al., 2023). However, individuals with celiac disease, experience an intense inflammatory reaction when consuming gluten and similar proteins present in rye and barley. Celiac disease has become one of the most prevalent gastrointestinal disorders in our society today. Although the primary treatment is a lifelong gluten-free diet, it may yield suboptimal results in some cases.

Celiac disease is an autoimmune disorder triggered by the consumption of gluten, a protein found in cereals, for example wheat, barley, and rye. In individuals with celiac disease, certain peptides derived from gluten can trigger an immune response that damages the lining of the small intestine. These specific peptides are known as toxic epitopes.

The main toxic epitopes that have been identified in gluten are associated with proteins, namely Alpha-Gliadins, Gamma-Gliadins, Omega-Gliadins, or Wheat Secalins. Alpha-gliadins comprise the peptide sequence QPQLPYPQPQLPY, specifically the section QPQLPYPQ, which is known to be a toxic epitope. This sequence is resistant to digestion by enzymes in the human digestive system and can trigger an immune response in individuals with celiac disease. Gamma-gliadins are another class of proteins present in gluten. The peptide sequence QLQPFPQPQLPY is one of the toxic epitopes found in gamma-gliadins. Like the alpha-gliadin epitope, this sequence is resistant to digestion and can lead to immune reactions. Omega-gliadins also contribute to the formation of toxic epitopes. The sequence is similar to the alpha-gliadin epitope, containing the sequence PQQPFPQPEQPQ. Secalins are a class of proteins found in rye. The peptide sequence LQLQPFPQPQLPYPQPQLPYPQPQLPYPQPQPF is a toxic epitope present in wheat seedlings. This sequence is highly resistant to breakdown by digestive enzymes and can trigger immune responses.

In recent years, significant advances have been made in our understanding of the pathophysiology of celiac disease. Gluten proteins, characterized by a high content of proline residues (10-15%), exhibit partial resistance to degradation by human proteases during digestion. As a result, large gluten peptides persist in the intestinal lumen after digestion, ensuring the survival of immunostimulatory epitopes. These peptides then pass through the intestinal epithelial barrier and enter the lamina propria, where adaptive immune reactions take place. A crucial step in this process is the deamidation of certain gluten peptides by tissue transglutaminase (TG2). This modification increases their affinity for HLA-DQ2 or DQ8 molecules, which are the most important genetic factors in celiac disease, present in antigen-presenting cells. Subsequently, a robust activation of CD4+ T-helper 1 cells occurs, leading to the production of proinflammatory cytokines (Lebwohl and Rubio-Tapia, 2021; Nilsen et al., 1998; Sollid, 2002). Additionally, CD4+ T-cells play a key role in activating and promoting the clonal expansion of B cells, which eventually differentiate into plasma cells and produce antibodies against gluten and TG2 (Di Sabatino and Corazza, 2009). As the inflammatory cascade ensues, the release of metalloproteinases and other tissue-damaging mediators induces crypt hyperplasia and villous atrophy (Green and Cellier, 2007). These changes contribute to the characteristic symptoms and damage observed in celiac disease.

With the increasing concern surrounding gluten-related intolerances, the market for gluten-free products has grown substantially. These products encompass a variety of food items designed to emulate traditional foods by substituting gluten with other ingredients, such as polysaccharide hydrocolloids and proteins from different sources. These substitutes are essential to provide structure to the dough and achieve a desirable texture (Ribeiro et al., 2019; Ziobro et al., 2013). However, it is important to note that adhering to a gluten-free diet can be considerably more expensive than a non-restricted diet and may lack proper nutritional balance. Furthermore, gluten-free products face certain technological limitations, leading to inferior textural properties in some cases (Marciniak et al., 2021).

The safe concentrations of toxic epitopes in flours for individuals with celiac disease are extremely low, ideally close to zero. Even very small amounts of these toxic epitopes can trigger an immune response and cause damage to the intestinal lining in individuals with celiac disease.

Reducing the amount of toxic epitopes in flours is a critical step in producing safe gluten-free products for individuals with celiac disease.

Mechanical separation is a process that aims to remove the outer layers of the grain, where grains like wheat are cleaned and the outer layers (bran) are removed.

Heat Processing is a process that can denature proteins, potentially altering the structure of toxic epitopes and reducing their harmful effects. However, excessively high temperatures can also affect the quality and taste of the final product.

Traditional sourdough fermentation involves using natural bacteria and yeast to ferment the dough over an extended period. This process can break down some of the gluten proteins, potentially reducing the concentration of toxic epitopes. However, not all sourdough processes are equally effective, and some commercial sourdough products may not provide sufficient gluten reduction.

Cross-Breeding and Genetic Modification is another approach followed by researchers, which are exploring ways to develop wheat varieties with reduced levels of toxic epitopes through cross-breeding and genetic modification.

Pulse Electric Field Treatment is an emerging technology, which involves applying short bursts of electric field to grains or flours. This treatment can disrupt protein structures and potentially reduce the toxicity of the epitopes.

The enzymatic treatment is another common process to break down or modify the proteins containing the toxic epitopes. For instance, certain proteases can hydrolyze gluten proteins, potentially reducing the concentration of the toxic sequences.

US2023232874 discloses a method of obtaining a modified flour from flours natively containing gluten, wherein the method comprises a step of mixing a cereal flour containing gluten with a proteolytic enzyme in the presence of an aqueous solution in order to at least partially remove the toxic epitopes present in certain gluten proteins, obtaining a hydrolyzed flour, and a further step of deactivating the residual antigenic toxic epitopes by means of a transamidation between the glutamyl residues present in the gluten proteins with amino-acid residues present in a lysine source.

Gianfrani et al. "Transamidation of Wheat Flour Inhibits the Response to Gliadin of Intestinal T Cells in Celiac Disease", GASTROENTEROLOGY, ELSEVIER INC, US, (20070901), vol. 133, no. 3, discloses the transamidation of cereal flours with transglutaminase in the presence of an amine group donor such as L-lysine or lysine methyl ester in order to reduce the release of toxic epitopes.

WO2021250712A1 describes a method that involves the use of proteolytic enzymes to partially remove antigenic epitopes from gluten proteins, followed by a transglutaminase treatment with a lysine source to further deactivate the remaining epitopes.

### Technical Problem

The effectiveness of enzymatic treatments can vary, being quite common that the reduction of the concentration of the native related toxic epitopes, after the enzymatic action, is not proper, being obtained unsafe concentrations in the treated flour for individuals suffering from celiac disease and it's important to ensure that the enzymes used are safe and approved for gluten reduction.

Efforts to address the requirement of a gluten-free diet have led to various approaches aimed at detoxifying gluten proteins. Scientifically sound methods include proteolysis of immunodominant epitopes, transamidation of glutamine residues found in glutamine-rich gliadins, and genetic modification using advanced genome editing techniques (Ribeiro et al., 2021; Ribeiro et al., 2018). While these gluten-targeted strategies show great promise, most of them tend to negatively impact the functional properties of gluten. The proteolysis method, for instance, results in the loss of gluten's unique viscoelasticity and hampers protein interactions, disrupting the formation of the gluten network (Wieser et al., 2023). Regarding transamidation reactions, certain amine nucleophiles, such as L-lysine or its ester derivatives, have been found to adversely affect the viscoelastic properties of the resulting wheat flours (Heredia-Sandoval et al., 2014). Also, the digestibility of flours can be affected (Ribeiro et al., 2020). Genetically modified low-gliadin wheat lines show promise in producing satisfactory foods. However, reducing gliadin content impacts the balance between glutenins and gliadins, thus affecting dough rheological properties (Gil-Humanes et al., 2014). Doubts surrounding the use of genetically modified organisms (GMOs) can impede the acceptance of this approach, as noted by (Laursen, 2016).

There is a need to identify a treatment for properly reducing the concentration of the native-related toxic epitopes, avoiding impairing the mechanical properties of the cereal flour, for example, its extensibility, as well as avoiding impairing its digestibility properties.

### Solution to Problem

The present invention solves the technical prior art problems by developing an enzymatic treatment wherein epsilon-polylysine is covalently incorporated into the proteins of said cereal flour by enzymatic catalysis prompted by a transglutaminase.

The covalent bonds formed among epsilon-polylysine and the proteins of said cereal flour significantly reduce the release of toxic epitopes for celiac patients.

The present invention concerns a process for preparing a modified cereal flour. In this process, a naturally derived peptide called epsilon-polylysine (epsilon -PL), which is generally recognized as safe (GRAS) certified in the United States, is covalently incorporated into gluten proteins. This incorporation significantly reduces the amount of toxic epitopes related to celiac disease. Importantly, this incorporation does not alter the digestibility properties of flour proteins. Furthermore, epsilon-PL is an affordable and easily accessible ingredient. Depending on its concentration, it can enhance the dough's resistance to extension and strength properties or improve the dough's extensibility and viscosity, both of which are vital for the production, namely, of bread and biscuits, respectively.

### Advantageous Effects of Invention

The process for preparing a modified cereal flour according to the invention makes it possible to prepare a modified cereal flour comprising reduced concentrations of the native celiac-related toxic epitopes amount found in the original flours. Additionally, the modified cereal flour exhibits a significant increase in maximum resistance to extension or total extensibility, compared to the original flour.

The resulting modified cereal flours exhibit improved rheological qualities compared to control flours, with the extent of improvement depending on the concentration of epsilon-polylysine used. For instance, using 1 mol epsilon-polylysine/mol of flour glutamine leads to increased strength properties, while higher concentrations, like 5 mol epsilon-polylysine/mol of flour glutamine, result in improved viscous properties.

Another advantage of the process according to the invention is that this treatment has no adverse effects on the digestibility of the flours.

### Brief Description of Drawings

With the purpose of promoting an understanding of the principles in accordance with the embodiments of the present invention, reference will be made to the embodiments illustrated in the figures and the terminology used to describe them. In any case, it must be understood that there is no intention of limiting the scope of the present invention to the figures. Any subsequent alterations or modifications of the inventive characteristics herein illustrated, as well as any additional applications of the principles and embodiments of the illustrated invention, which could normally occur to a person skilled in the art having this description, are considered as being within the scope of the claimed invention.
**Fig.1**

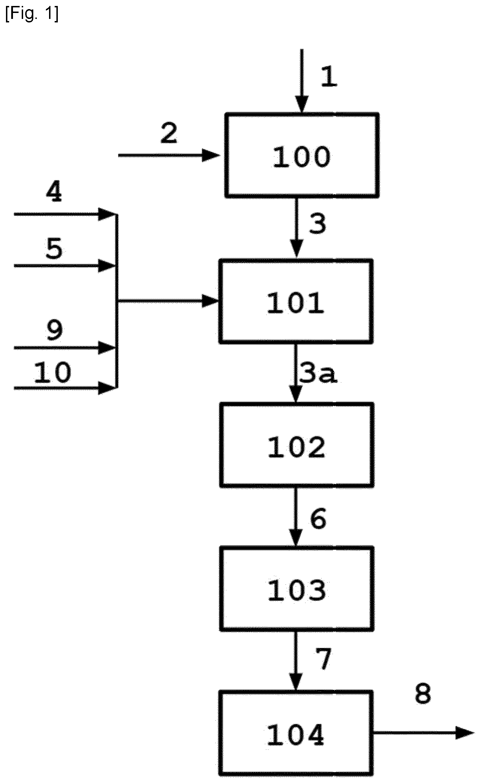

   [fig.1] illustrates a block diagram representation of an embodiment of the process for preparing a modified cereal flour.
**Fig.2**
   [fig.2] illustrates the characterization of the effect of covalent incorporation of epsilon-polylysine in flour proteins in relation to the release of toxic epitopes for celiac patients.
[fig.3] illustrates the characterization of the effect of covalent incorporation of epsilon-polylysine in flour proteins in relation to digestibility.
[fig.4] illustrates Kieffer microextensograph extension curves of dough produced using a modified cereal flour and comparatives flour.
[fig.5] illustrates the maximum resistance to extension of dough produced using a modified cereal flour and comparatives flour.
[fig.6] illustrates the total extensibility of dough produced using a modified cereal flour and comparatives flour.

### Description of Embodiments

The invention refers in a first aspect, as illustrated in Figure 1, to a process for preparing a modified cereal flour characterized in that it comprises the following steps:
a) Executing a dispersion step (100) of a cereal flour (1) in water or an aqueous solution (2) obtaining an aqueous dispersed cereal flour (3), wherein the pH of said water or aqueous solution (2) is in the range of 5 to 8; and
b) Executing a mixing step (101) by adding epsilon-polylysine (4) to said aqueous dispersed cereal flour (3); and
c) Executing a mixing step (101) by adding a transglutaminase (5) to said aqueous dispersed cereal flour (3); and
d) Executing an enzymatic incubation step (102) of the aqueous dispersed cereal flour (3) comprising epsilon-polylysine (4) and transglutaminase (5), wherein the epsilon-polylysine is covalently incorporated into the proteins of said cereal flour; obtaining an aqueous dispersed modified cereal flour (6), wherein the concentration of epsilon-polylysine (4) in the aqueous dispersed cereal flour (3) is in the range of 0.01 to 10 mol/mol of flour glutamine, and wherein the added amount of transglutaminase (5) in the aqueous dispersed cereal flour (3) is in the range of 0.1 to 20 Units/g of cereal flour, and wherein the incubation step (102) of the aqueous dispersed cereal flour (3) comprising epsilon-polylysine (4) and transglutaminase (5) is executed at a temperature of 2°C to 60°C for 1 h to 48 hours; and
e) Executing a separation step (103) of a wet modified cereal flour (7) from the aqueous dispersed modified cereal flour (6); and
f) Executing a drying step (104) of the wet modified cereal flour (7), obtaining a modified cereal flour (8), comprising epsilon-polylysine covalently incorporated into the proteins of said cereal flour by enzymatic catalysis prompted by a transglutaminase, wherein the mass ratio of epsilon-polylysine covalently incorporated into the proteins of said cereal flour is in the range of 0.001 to 3.5 % weight in relation to the weight of said modified cereal flour; and
   wherein steps b) and c) are executed in any order among themselves.

In Figure 1, the aqueous dispersed cereal flour (3) comprising epsilon-polylysine (4) and transglutaminase (5) is identified with the signal of reference (3a).

Epsilon-polylysine is a natural biopolymer with antimicrobial properties. It is a type of homopolymer consisting of L-lysine amino acids connected by peptide bonds. This polymer has been found to exhibit strong inhibitory effects against a wide range of microorganisms, including bacteria, fungi, and certain viruses. It is produced through fermentation by a specific strain of bacteria called *Streptomyces albulus.*

One of the primary industrial uses of Epsilon-polylysine is as a natural food preservative. It can extend the shelf life of various food products by inhibiting the growth of spoilage microorganisms and foodborne pathogens. It is often used in products like meat, seafood, dairy, and bakery items.

Transglutaminase is an enzyme that catalyzes the formation of covalent bonds between proteins. It is naturally found in various organisms, including animals, plants, and microorganisms. In industrial applications, microbial transglutaminase derived from specific bacteria is used for its protein-crosslinking properties. It can bond proteins together, leading to changes in the texture, structure, and functional properties of food products. In baking, transglutaminase can improve dough properties, providing better texture and volume to bread and other baked goods.

The present invention solves the technical prior art problems by developing an enzymatic treatment wherein epsilon-polylysine is covalently incorporated into the proteins of said cereal flour by enzymatic catalysis prompted by a transglutaminase.

It is unexpected for a person skilled in the art that the incorporation of Epsilon-polylysine in the proteins of cereal flours, by forming covalent bonds among epsilon-polylysine and the proteins of said cereal flour, significantly reduces the release of toxic epitopes, resulting in modified cereal flours, particularly suitable for celiac patients.

In the process for preparing a modified cereal flour, the pH of said water or aqueous solution (2) in step a) is in the range of 5 to 8. Even more preferably, the aqueous solution (2) is a buffered solution with a pH between 5 and 8, preferably in the range of 6.5 to 7.5.

In the preferred embodiments of the process for preparing a modified cereal flour, the proportion between the cereal flour (1) and said water or aqueous solution (2) in step a) is in the range of 1 to 50 % weight in relation to the volume of said water or aqueous solution (2).

Preferably, at least one additive selected from the group consisting of a reducing agent (9), a preservative agent (10), an antioxidant agent, a bleaching agent or an inactivated yeast is added to said aqueous dispersed cereal flour (3).

As illustrated in Figure 1, the reducing agent (9) or the preservative agent (10) can be added during the mixing step (101) but said additives can also be added during the dispersion step (100), during the enzymatic incubation step (102) or even after the enzymatic incubation step (102).

Adding a reducing agent (9) when preparing a cereal flour serves a specific purpose in baking, particularly when working with dough or batter that contains cereal flour. The primary role of a reducing agent (9) in this context is to improve the dough's or batter's extensibility, fermentation, and overall baking performance. Preferably, said reducing agent (9) is at least one from the group consisting of glutathione or L-cysteine, even more preferably glutathione. In the preferred embodiments, the concentration of the reducing agent (9) in the aqueous dispersed cereal flour (3) is in the range of 0.01 to 100 mmol/L, preferably in the range of 0.1 to 50 mmol/L, more preferably in the range of 10 to 30 mmol/L.

Preferably, said preservative agent (10) is at least one from the group consisting of sorbic acid and its salts, potassium sorbate, propionic acid and its salts, calcium propionate, sodium benzoate, sodium bisulphite, sodium metabisulphite or natamycin, preferably potassium sorbate or calcium propionate. In the preferred embodiments, the concentration of the preservative agent (10) is in the range of 0.0025% and 0.100%, preferably in the range of 0.015% to 0.040%, in relation to the mass of the cereal flour.

Preferably, said antioxidant agent is at least one from the group consisting of sodium bisulphite or sodium metabisulphite. Preferably, said bleaching agent is at least one from the group consisting of sodium bisulphite or sodium metabisulphite.

In the preferred embodiments, the concentration of epsilon-polylysine (4) in the aqueous dispersed cereal flour (3), in step c, is in the range of 0.01 to 10 mol/mol of flour glutamine, preferably with 0.01 to 5 mol/mol, even more preferably with 0.8 to 1.2 mol/mol as the preferred range concentration. Different degrees of polymerization (DP) can be used, namely in the range of DP=2 to DP= 60, preferably in the range of DP=10 to DP=30.

In the preferred embodiments, in step c, the added amount of transglutaminase (5) in the aqueous dispersed cereal flour (3) is in the range of 0.1 to 20 Units/g of cereal flour, more preferably 0.8 to 1.2 Units/g of cereal flour.

Preferably, the incubation step (102) of the aqueous dispersed cereal flour (3) comprising epsilon-polylysine (4) and transglutaminase (5) is executed at a temperature of 2°C to 60°C for 1 h to 48 hours, more preferably at a temperature of 30°C to 40°C for 16 h to 32 hours.

Even more preferably, the chemo-enzymatic synthesis process, when conducted under reducing conditions, with the addition of a reducing agent (9), significantly enhances the enzymatic activity of the transglutaminase during the enzymatically mediated chemical modification of gluten toxic epitopes (Ribeiro et al., 2015).

In the preferred embodiments, the separation step (103) is at least one of the group consisting of a centrifugation or a filtration. Centrifugation or filtration can be used to remove excess water from the treated flour. The wet-modified cereal flour (7) can be washed with water before being submitted to the drying step (104).

In the preferred embodiments, the drying step (104) can be executed in an oven or in a lyophilization device. Before the main drying process, it is possible to perform a pre-drying step to reduce the initial moisture content. This can help prevent the formation of clumps and facilitate more efficient drying.

When the main drying process is oven drying, preferably the wet modified cereal flour (7) is spread in a thin layer on baking trays or racks. This will allow for better air circulation and more even drying. The oven temperature is preferably set at a temperature below 100°C to prevent thermal degradation of the flour. Depending on the moisture content and the modified flour type, the drying process may take several hours to a day or more.

When the main drying process is lyophilization (Freeze-Drying), preferably the wet modified cereal flour (7) is spread in a thin layer on trays or plates suitable for freezing, and the trays are inserted in a freezer and freeze the flour until it's solid. Freezing helps maintain the structural integrity of the flour during the subsequent drying process. The frozen trays are transferred to a lyophilization chamber, which contains a vacuum pump that reduces the pressure to create a vacuum. The frozen flour will be exposed to low pressure, causing the frozen water to sublime directly from ice to vapor. The temperature in the lyophilization chamber is gradually increased to boost sublimation.

Once the flour is adequately dried, it is cooled before packaging, using a moisture-resistant packaging to prevent reabsorption of moisture.

Preferably, the cereal flour is at least one of the group consisting of wheat (*Triticum spp*.) flour, oat (*Avena sativa*) flour, rye (*Secale spp.*) flour, barley (*Hordeum spp*.) flour, triticale flour, rice (*Oryza sativa*) flour, corn (*Zea mays*) flour, spelt (*Triticum spelta*) flour, millet flour, sorghum flour, buckwheat (*Fagopyrum esculentum*) flour, or sprouted derivatives thereof, for example, malt. Triticale is a hybrid of wheat (*Triticum*) and rye (Secale).

The invention refers in a second aspect to a modified cereal flour comprising epsilon-polylysine covalently incorporated into the proteins of said cereal flour by effecting a transglutaminase treatment in the presence of epsilon-polylysine, wherein the mass ratio of epsilon-polylysine covalently incorporated into the proteins of said cereal flour is in the range of 0.001 to 3.5 % weight in relation to the weight of said modified cereal flour, and wherein the modified cereal flour obtained according to the process defined in any one of the claims 1-6.

The mass ratio of epsilon-polylysine covalently incorporated into the proteins of said cereal flour is in the range of 0.001 to 3.5 % weight in relation to the weight of said modified cereal flour, even more preferably in the range of 0.1 to 1.0 %.

Preferably, the modified cereal flour is obtained according to the process defined in the first aspect of the invention.

The invention refers in a third aspect to a cereal flour-based processed food characterized in that it is produced from a modified cereal flour, according to the second aspect of the invention, as a raw material.

The cereal flour-based processed foods comprise bread, biscuits, pasta, breakfast cereals, snack foods, crackers, pretzels, chips, pastries, cookies, muffins, cakes, and other baked goods, pizzas, tortillas, wraps, noodles, pancakes, waffles, cakes, pies, tarts, instant pancake mixes, instant cake mixes, instant baking mixes, or cereal bars.

### Examples

### Example 1.

To detoxify wheat (*Triticum spp*.) flour and increase the strength properties of the wheat dough, the flour was dispersed in water by agitation in a proportion of 20.5% weight in relation to the volume of water. Then, in this order, the preservative potassium sorbate (0.025% in relation to the mass of the wheat flour), glutathione reducing agent (20 mmol/L in the aqueous dispersed wheat flour), and epsilon-polylysine (1 mol/mol of flour glutamine) are added. The biocatalyst transglutaminase (1 Unit/g gram of cereal flour) is added later. The mixture is maintained at 37°C for twenty-four hours. After this period of treatment, the flour is separated from the reaction mixture by centrifugation, successively washed with water, and dried by lyophilization.

### Example 2.

To detoxify gluten and increase the strength properties of the gluten, the gluten was dispersed in water by agitation in a proportion of 2% weight in relation to the volume of water. Then, in this order, the preservative potassium sorbate (0.025% in relation to the mass of gluten), L-cysteine reducing agent (30 mmol/L in the aqueous dispersed gluten), and epsilon-polylysine (1 mol/mol of gluten glutamine) are added. The biocatalyst transglutaminase (10 Units/g gram of gluten) is added later. The mixture is maintained at 37°C for twenty-four hours. After this period of treatment, the gluten is separated from the reaction mixture by centrifugation, successively washed with water, and dried by lyophilization.

### Example 3.

To detoxify wheat (*Triticum spp*.) flour and increase the viscous properties of the wheat dough, the flour was dispersed in water by agitation in a proportion of 20.5% weight in relation to the volume of water. Then, in this order, the preservative potassium sorbate (0.025% in relation to the mass of the wheat flour), glutathione reducing agent (20 mmol/L in the aqueous dispersed wheat flour), and epsilon-polylysine (5 mol/mol of flour glutamine) are added. The biocatalyst transglutaminase (1 Unit/g gram of flour) is added later. The mixture is maintained at 40°C for twenty-four hours. After this period of treatment, the flour is separated from the reaction mixture by centrifugation, successively washed with water, and dried by lyophilization.

### Example 4.

To detoxify rye flour (*Secale spp*.) and increase the strength properties of the rye dough, the flour was dispersed in water by agitation in a proportion of 20.5% weight in relation to the volume of water. Then, in this order, the preservative calcium propionate (0.01% in relation to the mass of the rye flour), glutathione reducing agent (10 mmol/L in the aqueous dispersed rye flour), and epsilon-polylysine (1 mol/mol of flour glutamine) are added. The biocatalyst transglutaminase (1 Unit/g gram of flour) is added later. The mixture is maintained at 37°C for twenty-four hours. After this period of treatment, the flour is separated from the reaction mixture by centrifugation, successively washed with water, and dried by lyophilization.

### Example 5.

To detoxify barley (*Hordeum spp*.) flour, the flour was dispersed in sodium phosphate buffer (50 mmol/L; pH 7) by agitation in a proportion of 20.5% weight in relation to the volume of sodium phosphate buffer. Then, in this order, the preservative calcium propionate (0.01% in relation to the mass of the barley flour), glutathione reducing agent (10 mmol/L in the aqueous dispersed barley flour), and epsilon-polylysine (1 mol/mol of flour glutamine) are added. The biocatalyst transglutaminase (1 Unit/g gram of flour) is added later. The mixture is maintained at 37°C for twenty-four hours. After this period of treatment, the flour is separated from the reaction mixture by centrifugation, successively washed with water, and dried in a vacuum oven.

### Example 6.

To detoxify malt produced from barley, the flour was dispersed in sodium phosphate buffer (50 mmol/L; pH 7) by agitation in a proportion of 2% weight in relation to the volume of sodium phosphate buffer. Then, in this order, the preservative calcium propionate (0.01% in relation to the mass of malt), glutathione reducing agent (10 mmol/L in the aqueous dispersed malt from barley flour), and epsilon-polylysine (1 mol/mol of malt glutamine) are added. The biocatalyst transglutaminase (1 Unit/g gram of malt) is added later. The mixture is maintained at 37°C for twenty-four hours. After this period of treatment, the malt is separated from the reaction mixture by centrifugation, successively washed with water, and dried in a vacuum oven.

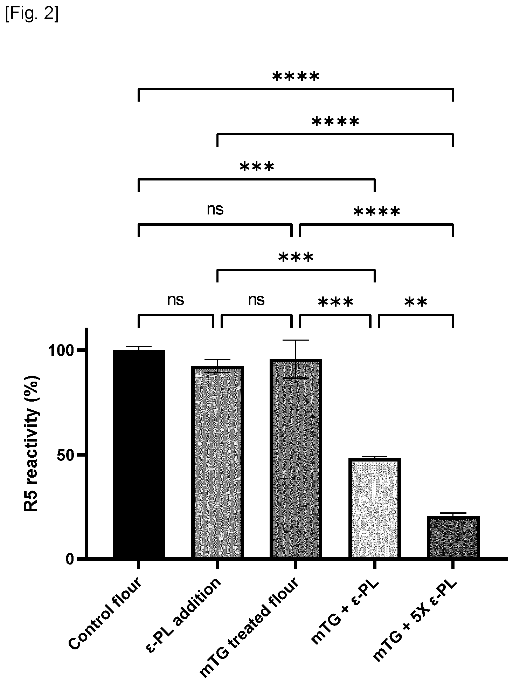

Figure 2 illustrates the characterization of the effect of covalent incorporation of epsilon-polylysine in flour proteins in relation to the release of toxic epitopes for celiac patients measured by immunoassay via R5 antibody. The labels of Figure 2 represent: Control flour (Control flour), the simple addition of polylysine (epsilon -PL addition), treated with microbial transglutaminase (mTG treated flour) and containing covalent incorporation of epsilon-polylysine into flour proteins in different proportions (mTG + epsilon -PL and mTG + 5X epsilon -PL). ns not significant, * p < 0.05, ** p < 0.01, *** p < 0.001 and **** p < 0.0001.

In Figures 2 to 6, the control sample "Control flour" was prepared without the inclusion of epsilon-polylysine or transglutaminase enzyme. The "Epsilon-PL addition" involved the same procedure but with the addition of epsilon-polylysine (5 mol epsilon-polylysine/mol glutamine) and without the transglutaminase enzyme. For the "mTG-treated flour", transglutaminase enzyme was added (1 Unit/gram of cereal flour) without epsilon-polylysine. In the cases of "mTG + epsilon-PL" and "mTG + 5X epsilon-PL", both transglutaminase (1 Unit/gram of cereal flour) and epsilon-polylysine, at concentrations of 1 mol epsilon-polylysine/mol glutamine and 5 mol epsilon-polylysine/mol glutamine were added, respectively.

Differences among the different treatment groups were determined by one-way analysis of variance (ANOVA). Multiple comparisons of treatment means were made using the Tukey's post-hoc test and the criterion for significance was p < 0.05. The label "ns" means not significant.

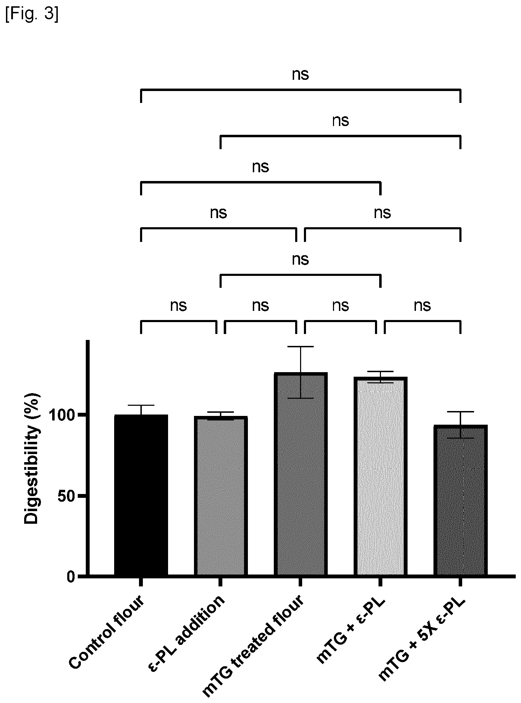

Figure 3 illustrates the characterization of the effect of covalent incorporation of epsilon-polylysine in flour proteins in relation to digestibility. The labels of Figure 3 represent: Control flour (Control flour), the simple addition of polylysine (epsilon -PL addition), treated with microbial transglutaminase (mTG treated flour) and containing covalent incorporation of epsilon-polylysine into flour proteins in different proportions (mTG + epsilon -PL and mTG + 5X epsilon -PL). ns not significant, * p < 0.05, ** p < 0.01, *** p < 0.001 and **** p < 0.0001.

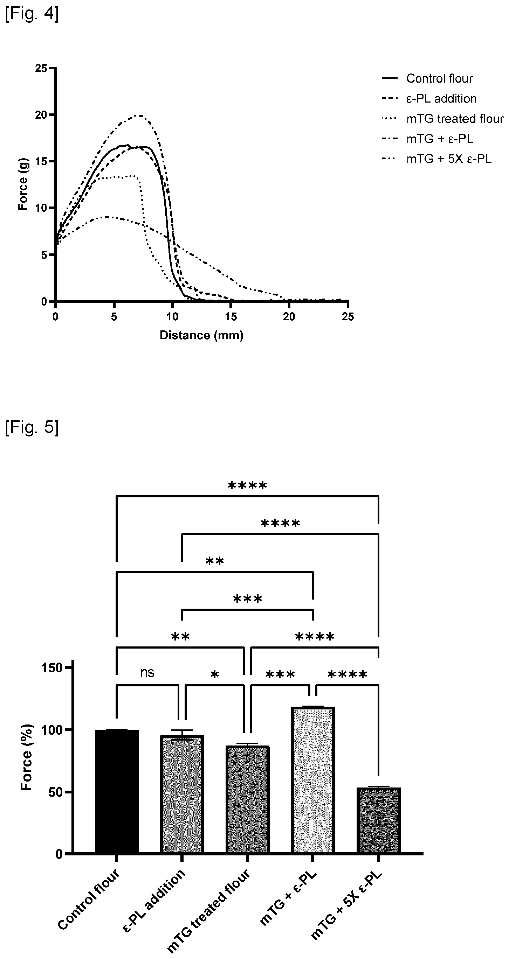

Figure 4 illustrates Kieffer microextensograph extension curves of dough produced using control flour (Control flour), with simple addition of polylysine (epsilon-PL addition), treated with microbial transglutaminase (mTG treated flour) and containing covalent incorporation of epsilon - polylysine into flour proteins in different proportions (mTG + epsilon -PL and mTG + 5X epsilon - PL).

Figure 5 illustrates the maximum resistance to extension of dough produced using control flour (Control flour), with simple addition of polylysine (epsilon-PL addition), treated with microbial transglutaminase (mTG treated flour) and containing covalent incorporation of epsilon-polylysine into flour proteins in different proportions (mTG + epsilon-PL and mTG + 5X epsilon-PL). ns not significant, * p < 0.05, ** p < 0.01, *** p < 0.001 and **** p < 0.0001.

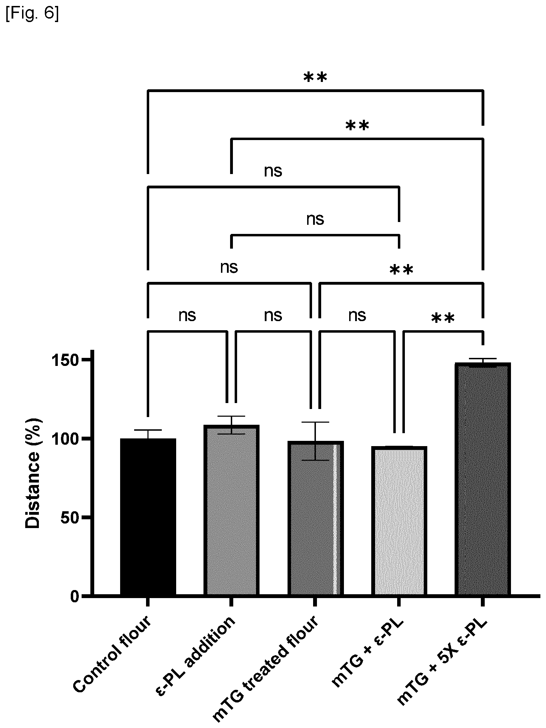

Figure 6 illustrates the total extensibility of dough produced using control flour (Control flour), with simple addition of polylysine (epsilon-PL addition), treated with microbial transglutaminase (mTG treated flour) and containing covalent incorporation of epsilon-polylysine into flour proteins in different proportions (mTG + epsilon-PL and mTG + 5X epsilon-PL). ns not significant, * p < 0.05, ** p < 0.01, *** p < 0.001 and **** p < 0.000.

In the results illustrated in Figures 2 to 6, namely in the case of wheat, rye, and barley, the treated flours retain only 20% or less of the native celiac-related toxic epitopes amount found in the original flours. Additionally, the modified flours exhibit a significant increase in maximum resistance to extension or total extensibility, greater than 20% compared to the original flours, without altering the digestibility properties.

As used in this description, the expressions "about" and "approximately" refer to a range in values of roughly 10% of the specified number.

As used in this description, the expression. "substantially" means that the real value is within an interval of about 10% of the desired value, variable or related limit, particularly within about 5% of the desired value, variable or related limit or particularly within about 1% of the desired value, variable or related limit.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B.

In addition, the articles "a" and "an" as used in this application and the appended claims should generally be construed to mean "one or more" unless specified otherwise or clear from the context to be directed to a singular form.

Further, as used herein, the term "exemplary" is intended to mean serving as an illustration or example of something and is not intended to indicate a preference.

The subject matter described above is provided as an illustration of the present invention and must not be interpreted to limit it. The terminology used with the purpose of describing specific embodiments, according to the present invention, must not be interpreted to limit the invention. As used in this description, the definite and indefinite articles, in their singular form, aim to include in the interpretation the plural forms, unless the context of the description explicitly indicates the contrary.

It will be understood that the expressions "comprise" and "include", when used in this description, specify the presence of the characteristics, the elements, the components, the steps, and the related operations, but do not exclude the possibility of other characteristics, elements, components, steps, and operations from being also contemplated.

All modifications, provided that they do not modify the essential features of the following claims, must be considered within the scope of protection of the present invention.

### Reference Signs List

1. A cereal flour
2. Water or an aqueous solution
3. An aqueous dispersed cereal flour
3a. An aqueous dispersed cereal flour comprising epsilon-polylysine and transglutaminase
4. Epsilon-polylysine
5. A transglutaminase
6. An aqueous dispersed modified cereal flour
7. A wet modified cereal flour
8. A modified cereal flour
9. A reducing agent
10.A preservative agent
100. A dispersion step
101. A mixing step
102. An enzymatic incubation step
103. A separation step
104. A drying step

### Citation List

Citation List follows:

### Non Patent Literature

NPL1: Di Sabatino, A., & Corazza, G. R. (2009). Coeliac disease. Lancet, 373(9673), 1480-1493.
NPL2: Gil-Humanes, J., Piston, F., Altamirano-Fortoul, R., Real, A., Comino, I., Sousa, C., Rosell, C. M., & Barro, F. (2014). Reduced-gliadin wheat bread: an alternative to the gluten-free diet for consumers suffering gluten-related pathologies. PLoS One, 9(3), e90898.
NPL3: Green, P. H. R., & Cellier, C. (2007). Medical progress: Celiac disease. New England Journal of Medicine, 357(17), 1731-1743.
NPL4: Laursen, L. (2016). Will Europe toast GM wheat for gluten sufferers? Nat Biotechnol, 34(4), 369-371.
NPL5: Lebwohl, B., & Rubio-Tapia, A. (2021). Epidemiology, Presentation, and Diagnosis of Celiac Disease. Gastroenterology, 160(1), 63-75.
NPL6: Marciniak, M., Szymczak-Tomczak, A., Mahadea, D., Eder, P., Dobrowolska, A., & Krela-Kazmierczak, I. (2021). Multidimensional Disadvantages of a Gluten-Free Diet in Celiac Disease: A Narrative Review. Nutrients, 13(2), 643.
NPL7: Nilsen, E. M., Jahnsen, F. L., Lundin, K. E., Johansen, F. E., Fausa, O., Sollid, L. M., Jahnsen, J., Scott, H., & Brandtzaeg, P. (1998). Gluten induces an intestinal cytokine response strongly dominated by interferon gamma in patients with celiac disease. Gastroenterology, 115(3), 551-563.
NPL8: Ribeiro, M., de Sousa, T., Sabença, C., Poeta, P., Bagulho, A. S., & Igrejas, G. (2021). Advances in quantification and analysis of the celiac-related immunogenic potential of gluten. Comprehensive Reviews in Food Science and Food Safety, 20(5), 4278-4298.
NPL9: Ribeiro, M., Lopes, S., Picascia, S., Gianfrani, C., & Nunes, F. M. (2020). Reinventing the nutraceutical value of gluten: The case of I-theanine-gluten as a potential alternative to the gluten exclusion diet in celiac disease. Food Chemistry, 324, 126840.
NPL10: Ribeiro, M., Picascia, S., Rhazi, L., Gianfrani, C., Carrillo, J. M., Rodriguez-Quijano, M., Branlard, G., & Nunes, F. M. (2019). Effect of in situ gluten-chitosan interlocked self-assembled supramolecular architecture on rheological properties and functionality of reduced celiac-toxicity wheat flour. Food Hydrocolloids, 90, 266-275.
NPL11: Ribeiro, M., Nunes, F. M., Rodriguez-Quijano, M., Carrillo, J. M., Branlard, G., & Igrejas, G. (2018). Next-generation therapies for celiac disease: the gluten-targeted approaches. Trends in Food Science and Technology, 75, 56-71.
NPL11: Ribeiro, M., Nunes, F. M., Guedes, S., Domingues, P., Silva, A.M., Carrillo, J. M., Rodriguez-Quijano, M., Branlard, G., & Igrejas, G. (2015). Efficient chemo-enzymatic gluten detoxification: reducing toxic epitopes for celiac patients improving functional properties. Sci Rep 5, 18041.
NPL13: Sollid, L. M. (2002). Coeliac disease: dissecting a complex inflammatory disorder. Nat Rev Immunol, 2(9), 647-655..
NPL14: Wieser, H., Koehler, P., & Scherf, K. A. (2023). Chemistry of wheat gluten proteins: Quantitative composition. Cereal Chemistry, 100(1), 36-55.
NPL15: Ziobro, R., Witczak, T., Juszczak, L., & Korus, J. (2013). Supplementation of gluten-free bread with non-gluten proteins. Effect on dough rheological properties and bread characteristic. Food Hydrocolloids, 32(2), 213-220.

## Claims

1. A process for preparing a modified cereal flour **characterized in that** it comprises the following steps:
a) Executing a dispersion step (100) of a cereal flour (1) in water or an aqueous solution (2) obtaining an aqueous dispersed cereal flour (3), wherein the pH of said water or aqueous solution (2) is in the range of 5 to 8; and
b) Executing a mixing step (101) by adding epsilon-polylysine (4) to said aqueous dispersed cereal flour (3); and
c) Executing a mixing step (101) by adding a transglutaminase (5) to said aqueous dispersed cereal flour (3); and
d) Executing an enzymatic incubation step (102) of the aqueous dispersed cereal flour (3) comprising epsilon-polylysine (4) and transglutaminase (5), wherein the epsilon-polylysine is covalently incorporated into the proteins of said cereal flour; obtaining an aqueous dispersed modified cereal flour (6), wherein the concentration of epsilon-polylysine (4) in the aqueous dispersed cereal flour (3) is in the range of 0.01 to 10 mol/mol of flour glutamine, and wherein the added amount of transglutaminase (5) in the aqueous dispersed cereal flour (3) is in the range of 0.1 to 20 Units/g of cereal flour, and wherein the incubation step (102) of the aqueous dispersed cereal flour (3) comprising epsilon-polylysine (4) and transglutaminase (5) is executed at a temperature of 2°C to 60°C for 1 h to 48 hours; and
e) Executing a separation step (103) of a wet modified cereal flour (7) from the aqueous dispersed modified cereal flour (6); and
f) Executing a drying step (104) of the wet modified cereal flour (7), obtaining a modified cereal flour (8) comprising epsilon-polylysine covalently incorporated into the proteins of said cereal flour by enzymatic catalysis prompted by a transglutaminase, wherein the mass ratio of epsilon-polylysine covalently incorporated into the proteins of said cereal flour is in the range of 0.001 to 3.5 % weight in relation to the weight of said modified cereal flour; and
wherein steps b) and c) are executed in any order among themselves.

2. The process for preparing a modified cereal flour, according to the previous claim, wherein at least one additive selected from the group consisting of a reducing agent (9), a preservative agent (10), an antioxidant agent, a bleaching agent or an inactivated yeast is added to said aqueous dispersed cereal flour (3).

3. The process for preparing a modified cereal flour, according to claim 2, wherein said reducing agent (9) is at least one from the group consisting of glutathione or L-cysteine.

4. The process for preparing a modified cereal flour, according to any one of claims 2 to 3, wherein said preservative agent (10) is at least one from the group consisting of sorbic acid and its salts, potassium sorbate, propionic acid and its salts, calcium propionate, sodium benzoate, sodium bisulphite, sodium metabisulphite or natamycin.

5. The process for preparing a modified cereal flour, according to any one of the previous claims, wherein said separation step (103) is at least one of the group consisting of a centrifugation or a filtration.

6. The process for preparing a modified cereal flour, according to any one of the previous claims, wherein said cereal flour is at least one of the group consisting of wheat flour, oat flour, rye flour, barley flour, triticale flour, rice flour, corn flour, spelt flour, millet flour, sorghum flour, buckwheat flour, or sprouted derivatives thereof, for example malt.

7. A modified cereal flour **characterized in that** it comprises epsilon-polylysine covalently incorporated into the proteins of said cereal flour by effecting a transglutaminase treatment in the presence of epsilon-polylysine, wherein the mass ratio of epsilon-polylysine covalently incorporated into the proteins of said cereal flour is in the range of 0.001 to 3.5 % weight in relation to the weight of said modified cereal flour, and wherein the modified cereal flour obtained according to the process defined in any one of the previous claims.

8. A cereal flour-based processed food **characterized in that** it is produced from a modified cereal flour according to claim 7 as a raw material.

## Patentansprüche

1. Ein Verfahren zur Zubereitung eines modifizierten Getreidemehls, **dadurch gekennzeichnet, dass** es die folgenden Schritte umfasst:
a) Ausführen eines Dispersionsschrittes (100) eines Getreidemehls (1) in Wasser oder einer wässrigen Lösung (2), wobei ein wässrig dispergiertes Getreidemehl gewonnen wird (3), wobei der pH-Wert des genannten Wassers oder der genannten wässrigen Lösung (2) innerhalb des Bereichs von 5 bis 8 liegt; und
b) Ausführen eines Mischungsschrittes (101) durch die Zugabe von Epsilon-Polylysin (4) zu dem genannten wässrig dispergierten Getreidemehls (3); und
c) Ausführen eines Mischungsschrittes (101) durch die Zugabe von Transglutaminase (5) zu dem genannten wässrig dispergierten Getreidemehls (3); und
d) Ausführen eines enzymatischen Inkubationsschritts (102) des wässrig dispergierten Getreidemehls (3), umfassend Epsilon-Polylysin (4) und Transglutaminase (5), wobei das Epsilon-Polylysin kovalent in die Proteine des Getreidemehls eingebaut wird; wobei ein wässrig dispergiertes modifiziertes Getreidemehl (6) gewonnen wird, wobei die Konzentration von Epsilon-Polylysin (4) in dem wässrig dispergierten Getreidemehl (3) innerhalb des Bereichs 0, 01 bis 10 mol/mol Mehlglutamin liegt, und wobei die zugegebene Menge an Transglutaminase (5) im wässrig dispergierten Getreidemehl (3) innerhalb des Bereichs 0,1 bis 20 Einheiten/g Getreidemehl liegt, und wobei der Inkubationsschritt (102) eines wässrig dispergierten Getreidemehls (3), umfassend Epsilon-Polylysin (4) und Transglutaminase (5), bei einer Temperatur von 2°C bis 60°C für 1 Stunde bis zu 48 Stunden ausgeführt wird; und
e) Ausführen eines Trennungsschrittes (103) eines nass modifizierten Getreidemehls (7) von dem wässrig dispergierten modifizierten Getreidemehl (6); und
f) Ausführen eines Trocknungsschrittes (104) eines nass modifizierten Getreidemehls (7), wobei ein modifiziertes Getreidemehl (8) gewonnen wird, umfassend Epsilon-Polylysin, das durch eine von einer Transglutaminase katalysierte enzymatische Reaktion kovalent in die Proteine des genannten Getreidemehls eingebaut ist, wobei das Massenverhältnis des kovalent in die Proteine des genannten Getreidemehls eingebauten Epsilon-Polylysins innerhalb des Bereichs von 0,001 bis 3,5 Gew.-% bezogen auf das Gewicht des genannten modifizierten Getreidemehls liegt; und
wobei Schritte b) und c) in beliebiger Reihenfolge untereinander ausgeführt werden.

2. Das Verfahren zur Zubereitung eines modifizierten Getreidemehls nach dem vorhergehenden Anspruch, wobei dem genannten wässrig dispergierten Getreidemehl (3) mindestens ein Zusatzstoff zugesetzt wird, ausgewählt aus der Gruppe bestehend aus einem Reduziermittel (9), einem Konservierungsmittel (10), einem Antioxidationsmittel, einem Bleichmittel oder einer inaktivierten Hefe.

3. Das Verfahren zur Zubereitung eines modifizierten Getreidemehls nach Anspruch 2, wobei das genannte Reduziermittel (9) mindestens eines aus der Gruppe bestehend aus Glutathion oder L-Cystein ist.

4. Das Verfahren zur Zubereitung eines modifizierten Getreidemehls nach einem der Ansprüche 2 bis 3, wobei das genannte Konservierungsmittel (10) mindestens eines aus der Gruppe bestehend aus Sorbinsäure und deren Salzen, Kaliumsorbat, Propionsäure und deren Salzen, Calciumpropionat, Natriumbenzoat, Natriumbisulfit, Natriummetabisulfit oder Natamycin ist.

5. Das Verfahren zur Zubereitung eines modifizierten Getreidemehls nach einem der vorhergehenden Ansprüche, wobei der genannte Trennungsschritt (103) mindestens einer aus der Gruppe bestehend aus Zentrifugation oder Filtration ist.

6. Das Verfahren zur Zubereitung eines modifizierten Getreidemehls nach einem der vorhergehenden Ansprüche, wobei das genannte Getreidemehl mindestens eines aus der Gruppe bestehend aus Weizenmehl, Haferflockenmehl, Roggenmehl, Gerstenmehl, Triticale-Mehl, Reismehl, Maismehl, Dinkelmehl, Hirsemehl, Sorghummehl, Buchweizenmehl oder gekeimten Derivaten davon, beispielsweise Malz, ist.

7. Ein modifiziertes Getreidemehl, **dadurch gekennzeichnet, dass** es Epsilon-Polylysin umfasst, das durch eine Transglutaminasebehandlung in Gegenwart von Epsilon-Polylysin kovalent in die Proteine des genannten Getreidemehls eingebaut ist, wobei das Massenverhältnis des kovalent in die Proteine des genannten Getreidemehls eingebauten Epsilon-Polylysins im Bereich von 0,001 bis 3,5 Gew.-% bezogen auf das Gewicht des genannten modifizierten Getreidemehls liegt, und wobei das modifizierte Getreidemehl nach dem in einem der vorhergehenden Ansprüche definierten Verfahren gewonnen wird.

8. Ein verarbeitetes Lebensmittel auf Getreidemehlbasis, **dadurch gekennzeichnet, dass** es aus einem modifizierten Getreidemehl nach Anspruch 7 als Ausgangsmaterial hergestellt wird.

## Revendications

1. Un procédé pour préparer une farine céréalière modifiée, **caractérisé en ce qu'**il comprend les étapes suivantes :
a) Exécuter une étape de dispersion (100) d'une farine céréalière (1) dans de l'eau ou une solution aqueuse (2), obtenant une farine céréalière dispersée dans l'eau (3), dans laquelle le pH de ladite eau ou solution aqueuse (2) est comprise entre 5 et 8; et
b) Exécuter une étape de mélange (101) en ajoutant de l'epsilon-polylysine (4) à ladite farine céréalière dispersée dans l'eau (3); et
c) Exécuter une étape de mélange (101) en ajoutant une transglutaminase (5) à ladite farine céréalière dispersée dans l'eau (3); et
d) Exécuter une étape d'incubation enzymatique (102) de la farine céréalière dispersée dans l'eau (3) comprenant l'epsilon-polylysine (4) et la transglutaminase (5), dans laquelle l'epsilon-polylysine est incorporée de manière covalente aux protéines de ladite farine céréalière; obtenant une farine céréalière modifiée dispersée dans l'eau (6), dans laquelle la concentration d'epsilon-polylysine (4) dans la farine céréalière dispersée dans l'eau (3) est comprise entre 0,01 et 10 mol/mol de glutamine de la farine, et dans laquelle la quantité ajoutée de transglutaminase (5) dans ladite farine céréalière dispersée dans l'eau (3) est comprise entre 0,1 et 20 unités/g de farine céréalière, et dans laquelle l'étape d'incubation (102) de la farine céréalière dispersée dans l'eau (3) comprenant l'epsilon-polylysine (4) et la transglutaminase (5) est exécutée à une température de 2 °C à 60 °C pendant 1 h à 48 heures; et
e) Exécuter une étape de séparation (103) d'une farine céréalière modifiée humide (7) à partir de la farine céréalière modifiée dispersée dans l'eau (6); et
f) Exécuter une étape de séchage (104) de la farine céréalière modifiée humide (7), obtenant une farine céréalière modifiée (8) comprenant de l'epsilon-polylysine incorporée de manière covalente aux protéines de ladite farine céréalière par catalyse enzymatique provoquée par une transglutaminase, dans laquelle le rapport massique d'epsilon-polylysine incorporée de manière covalente aux protéines de ladite farine céréalière est compris entre 0,001 et 3,5 % en poids par rapport au poids de ladite farine céréalière modifiée; et
dans laquelle les étapes b) et c) sont exécutées dans un ordre quelconque entre elles.

2. Le procédé pour préparer une farine céréalière modifiée, selon la revendication précédente, dans lequel au moins un additif choisi dans le groupe constitué d'un agent réducteur (9), d'un agent conservateur (10), d'un agent antioxydant, d'un agent de blanchiment ou d'une levure inactivée est ajouté à ladite farine céréalière dispersée dans un milieu aqueux (3).

3. Le procédé pour préparer une farine céréalière modifiée, selon la revendication 2, dans lequel ledit agent réducteur (9) est au moins l'un du groupe constitué de glutathion ou de L-cystéine.

4. Le procédé pour préparer une farine céréalière modifiée, selon l'une quelconque des revendications 2 à 3, dans lequel ledit agent conservateur (10) est au moins l'un du groupe constitué d'acide sorbique et de ses sels, de sorbate de potassium, d'acide propionique et de ses sels, de propionate de calcium, de benzoate de sodium, de bisulfite de sodium, de métabisulfite de sodium ou de natamycine.

5. Le procédé pour préparer une farine céréalière modifiée, selon l'une quelconque des revendications précédentes, dans lequel ladite étape de séparation (103) est au moins l'une du groupe constitué d'une centrifugation ou d'une filtration.

6. Le procédé pour préparer une farine céréalière modifiée, selon l'une quelconque des revendications précédentes, dans lequel ladite farine céréalière est au moins l'une du groupe constitué de farine de blé, farine d'avoine, farine de seigle, farine d'orge, farine de triticale, farine de riz, farine de maïs, farine d'épeautre, farine de millet, farine de sorgho, farine de sarrasin, ou de leurs dérivés germés, par exemple le malt.

7. Une farine céréalière modifiée, **caractérisée en ce qu'**elle comprend de l'epsilon-polylysine incorporée de manière covalente aux protéines de ladite farine céréalière par l'effet d'un traitement à la transglutaminase en présence d'epsilon-polylysine, dans laquelle le rapport massique d'epsilon-polylysine incorporée de manière covalente aux protéines de ladite farine céréalière est compris entre 0,001 et 3,5 % en poids par rapport au poids de ladite farine céréalière modifiée, et dans laquelle la farine céréalière modifiée est obtenue selon le procédé défini dans l'une quelconque des revendications précédentes.

8. Un aliment transformé à base de farine céréalière, **caractérisé en ce qu'**il est produit à partir d'une farine céréalière modifiée selon la revendication 7 en tant que matière première.
